(19)

**Europäisches Patentamt**
**European Patent Office**
**Office européen des brevets**

(11)　　**EP 2 711 152 B1**

(12)　　**EUROPEAN PATENT SPECIFICATION**

(45) Date of publication and mention
of the grant of the patent:
**13.05.2015 Bulletin 2015/20**

(51) Int Cl.:
**B29B 11/14** *(2006.01)*　　　**B29C 49/54** *(2006.01)*
**B65D 1/02** *(2006.01)*　　　**B65D 79/00** *(2006.01)*

(21) Application number: **13305142.5**

(22) Date of filing: **06.02.2013**

(54) **Method for blow molding a hot-fill container with increased stretch ratios**

Verfahren zum Blasformen eines Heißfüllungsbehälters mit erhöhten Streckungsverhältnissen

Procédé de soufflage d'un récipient remplissable à chaud, à taux d'étirage accrus

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.03.2014 Bulletin 2014/13**

(73) Proprietor: **SIDEL PARTICIPATIONS**
**76930 Octeville-sur-Mer (FR)**

(72) Inventors:
• **Godet, Florian**
**76930 Octeville-sur-Mer (FR)**

• **Bunel, Christophe**
**76930 Octeville-sur-Mer (FR)**

(74) Representative: **Louiset, Raphael**
**Dejade & Biset**
**35, rue de Châteaudun**
**75009 Paris (FR)**

(56) References cited:
**WO-A1-95/16554　　US-A1- 2009 223 920**

• **DATABASE WPI Week 200864 Thomson
Scientific, London, GB; AN 2008-K77336
XP002694696, -& JP 2008 178994 A (HOKKAI CAN
CO LTD) 7 August 2008 (2008-08-07)**

## Description

FIELD OF THE INVENTION

The invention generally relates to the manufacturing of containers, such as bottles, which are produced by blow molding or stretch-blow molding from preforms made of plastic (mostly thermoplastic, e.g. PET) material. More specifically, the invention relates to the manufacturing of hot-fill containers, i.e. containers ready to be filled by liquids at a high temperature (generally higher than the glass transition temperature of the material in which the container is made).

BACKGROUND OF THE INVENTION

A conventional preform, which is generally injected molded but might also be compression molded, is comprised of an open cylindrical threaded upper portion or neck, which terminates at a lower end in an annular protrusion, forming a support collar (used to carry the perform and the container at different steps of the manufacturing and packaging processes), a wall portion of generally cylindrical shape which extends below the support collar, and a closed rounded bottom portion which extends below the wall portion.

During a conventional blow molding process, the preform undergoes both an axial (or length) stretch and a radial (or hoop) stretch to form the container. The combined length and hoop stretch provides molecular bi-orientation to the material, whereby the final container has good structural rigidity, generally sufficient to resist mechanical stresses due to the hydrostatic pressure of the liquid therein.

However, bi-orientation induces residual stresses in the material. Such residual stresses are released during hot-filling (particularly with a liquid having a temperature higher than the glass transition temperature of the material), causing a deformation of the container that could make it unsuitable for use - and hence for sale.

To decrease deformation of the container during hot-filling, it is known to run the blow molding within a mold provided with sidewalls and a mold base, the sidewalls being heated at a predetermined temperature, and to complete the blowing through a thermal treatment called heat set, by which the container is held in contact with the sidewalls at a predetermined temperature between 80°C and 180°C for a predetermined time (generally several seconds).

Generally, two sidewalls are present. They are usually named "half-molds". They can be moved away from one another and from the mold base for allowing either the introduction of a preform or the removal of the finished container. The sidewalls are placed in close contact together and with the mold base during the blow molding step.

However, heat setting solves only part of the problems of deformation of a hot-fill container. Indeed, while cooling, the liquid and the air above the liquid in the capped container undergo a decrease in volume that tends to make the container retract.

Several solutions have been considered for decreasing the visible effects of such retraction. These solutions generally concern the shape of the container.

For example, it has been proposed to equip the body of the container with deformable side panels that bend inwards under the effect of the retraction and bend back outwards when the container is opened. Such containers must be handled with care by the user because of the flexibility of the body, which may result in accidental spraying.

It has also been proposed to provide the container with a base portion capable of withstanding the various stresses and strains applied to the container, see e.g. U.S. Pat. No. 6,896,147 (assigned to Graham).

More recently, it has been proposed to give the bottom of the container a special shape capable of absorbing at least part of the deformation due to retraction whereas the body of the container is provided with a rigid (i.e. resistant to hot-fill deformation) structure, see e.g. U.S. Pat. No. 7,451,886 (assigned to Amcor).

Deformable bottoms take advantage over deformable side panels in that from the user's point of view the container feels rigid, whereby the risk of spraying during handling is considerably lowered. However, the amount of vacuum absorbed by deformation of the deformable bottom may be insufficient and result in a deformation of the body which may take an oval shape (such a well-known deformation is called "ovalization" by the skilled technicians).

U.S. Pat. Appl. No. 2008/0047964 (Denner et al, assigned to CO2PAC) discloses a container comprising a pressure panel located in the bottom portion of the container. The pressure panel is movable between an outwardly-inclined position and an inwardly-inclined position to compensate for a change of pressure inside the container. In order to alleviate all or a portion of the vacuum forces within the container, the pressure panel is moved from the outwardly-inclined position by a mechanical pusher in order to force the pressure panel into the inwardly-inclined position. The inversion of the pressure panel from the outwardly-inclined position to the inwardly-inclined position reduces the internal volume of the container.

Denner also provides an exemplary method of blow molding such a plastic container, which includes enclosing a softened polymer material such as PET within a blow mold having side wall portions and a base mold portion movable with respect of the side mold portions in the vertical direction between a retracted position and an extended position. The base mold portion is displaced upwardly into the mold cavity to form a transverse pressure panel deeply set within the base portion of the container.

Although Denner provides a solution which in theory alleviates the drawbacks of previous solutions with deformable bottoms in that it maximizes the amount of vacuum compensation, Denner fails to disclose the whole process allowing to form the target container, despite the mere description of the deep setting of the pressure panel by means of a movable base mold portion, the use of which, as may be noted, is already known, see e.g. U.S. Pat. No. 4,035,455 (Rosenkranz et al). In particular, Denner fails to point out specific structural features of the preform and specific features of the process, which should be used to allow the target container to be correctly formed, with a proper distribution of the material throughout the container. Further methods of manufacturing not-fill containers are disclosed in US 2009 223920 and JP 2008 178994.

SUMMARY OF THE INVENTION

It is a main purpose of the present invention to alleviate the hereabove mentioned drawbacks of the prior art.

It is an object of the invention to propose a full method of manufacturing a hot-fill container provided with a high standing ring and a central outwardly-inclined invertible diaphragm.

It is another object of the invention to enhance performances of such a hot-fill container.

It is yet another object of the invention to increase stability of such a hot-fill container while facilitating inversion of the invertible diaphragm.

It is therefore provided a method of manufacturing a hot-fill container from a plastic preform by means of blow molding said preform, wherein said container is provided with a base including a high standing ring and a central outwardly-inclined invertible diaphragm, wherein said preform has an open neck, a wall and a closed bottom, said method comprising the steps of:

- heating the preform at a temperature greater than the glass transition temperature of the plastic;
- introducing the such heated preform within a mold provided with a mold base and sidewalls, which sidewalls are heated at a predetermined temperature;
- blow molding the preform to form the container for subsequent hot-fill applications;

wherein:

- the wall of said preform has a main segment of substantially cylindrical shape and a lower end segment of increased thickness adjacent the bottom, whereby said lower end segment is stretched to form the high standing ring of the container, and the bottom has a thickness lower than the lower end segment whereby the bottom is stretched to form the invertible diaphragm of the container,
- the preform is subjected to a length stretch ratio comprised between 3.4 and 3.9, and a hoop stretch ratio comprised between 3.5 and 3.9.

According to various embodiments, taken either separately or in combination:

- the stretch ratio is comprised between 3.6 and 3.8;
- the hoop stretch ratio is comprised between 3.7 and 3.8;
- the lower end segment of the preform has a wall thickness of about 10% greater than a wall thickness of the main segment;
- the bottom has a central region with a substantially constant wall thickness;
- the central region has a wall thickness lower than 80% of the wall thickness in the lower end segment;
- the central region has a wall thickness lower than 70% of the wall thickness in the lower end segment;
- the central region has a wall thickness of about 65% of the wall thickness in the lower end segment;
- preform is axially stretched by a stretch rod;
- the preform is provided with a centering index capable of being received in a recess formed at a lower end tip of the stretch rod.

The above and other objects and advantages of the invention will become apparent from the detailed description of preferred embodiments, considered in conjunction with the accompanying drawings.

BRIEF DESCRIPTION OF THE DRAWINGS

In the drawings:

FIG.1 is a realistic sectional view showing both a preform and a resulting hot-fill container formed therefrom;
FIG.2 is a realistic bottom perspective view showing the container of FIG.1;
FIG.3 is a realistic enlarged fragmentary sectional view showing a detail of the container of FIG.1 through the base of the container;
FIG.4 is a realistic enlarged sectional view showing the preform of FIG.1;
FIG.5 is a realistic enlarged fragmentary sectional view showing a detail of the preform of FIG.4, in the vicinity of a bottom of the preform;
FIG.6 is a realistic sectional view of a stretch blow molding unit including a mold with a movable base mold for manufacturing a hot-fill container, showing a preform from which the container is to be formed;
FIG.7 is a realistic sectional view of the stretch-blow molding unit of FIG.6, further showing the container formed therein from the preform (also shown in dotted line);
FIG.8 is a realistic perspective view of a base mold for a molding unit of FIG.6;
FIG.9 is a realistic enlarged fragmentary sectional view showing a detail of the base mold of FIG.8.

## DETAILED DESCRIPTION

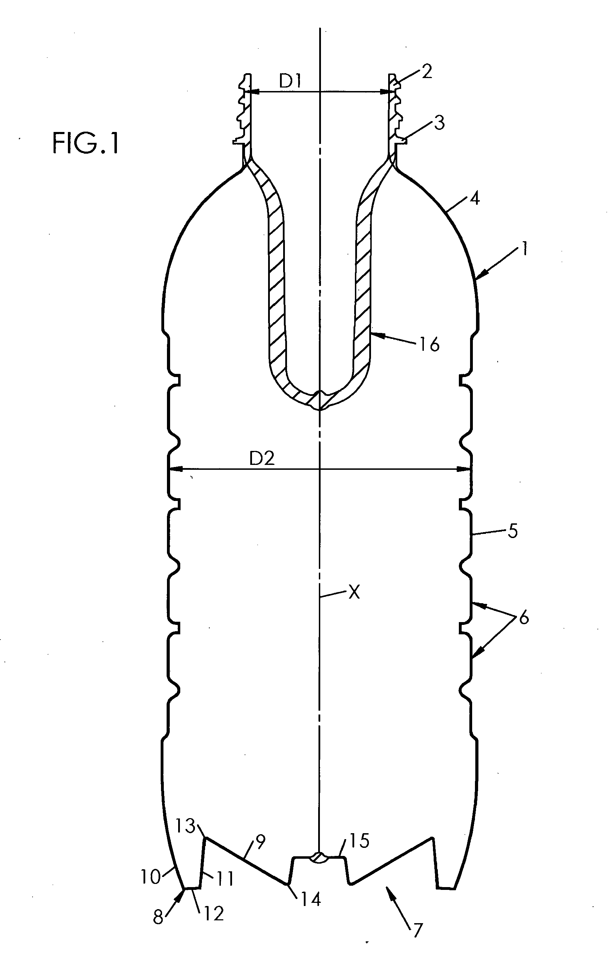

FIG.1 illustrates a hot-fill container **1** suitable for being filled with a hot product (such as tea, fruit juice, or a sports drink).

The container **1** includes an upper open cylindrical threaded upper portion or neck **2,** which terminates, at a lower end thereof, in a support collar **3** of greater diameter. Below the collar **3,** the container **1** includes a shoulder **4** which is connected to the collar **3** through a cylindrical upper end portion of short length.

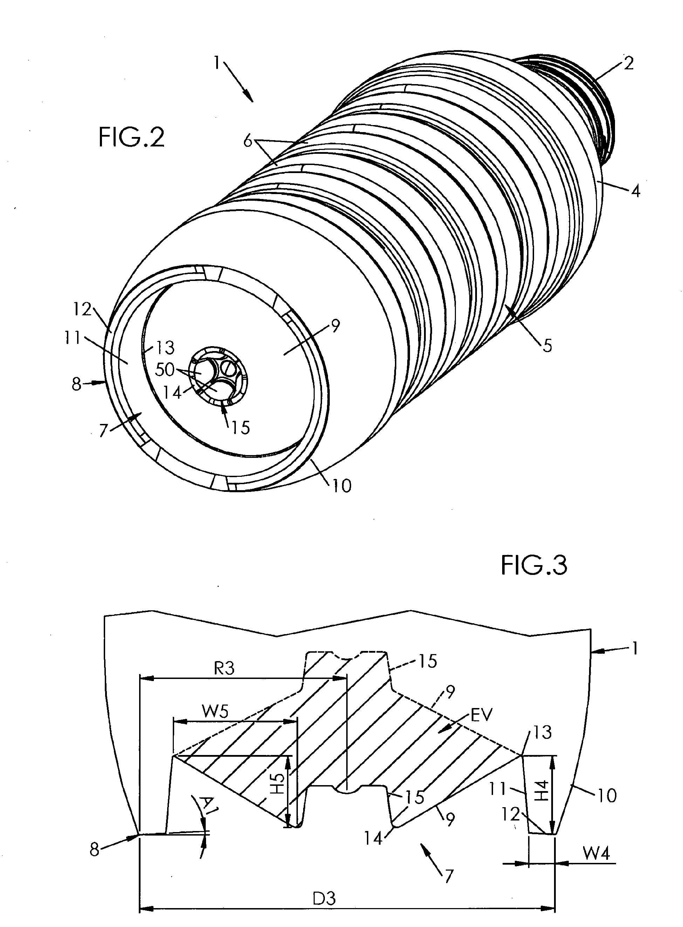

Below the shoulder **4,** the container **1** has a wall portion **5** which is substantially cylindrical around a container main axis **X.** The wall portion **5** may, as depicted on FIG.1 and 2, include annular stiffening ribs **6** capable of resisting stresses which would otherwise tend to make the wall portion **5** oval when viewed in a horizontal section (such a deformation is standard and called ovalization).

The neck **2** has an outer diameter (taken between the threads) referenced D1 and the wall portion **5** has an overall diameter referenced D2.

At a lower end of the wall portion **5,** the container **1** has a base **7** which closes the container **1** and allows the container **1** to be put on a planar surface such as a table.

The container base **7** includes a standing ring **8,** which is a high standing ring as it will be explained later, and a central outwardly-inclined invertible diaphragm **9** which is capable of being forcedly (e.g. mechanically) pushed upwards (i.e. inwards with respect of the container **1)** after the container **1** has been filled with a product, capped and cooled down, in order to compensate for the vacuum generated by the cooling of the product.

The standing ring **8** connects to the wall portion **5** of the container at a lower end portion **10** thereof, an inner portion **11** and a support flange **12.** The inner portion **11** connects the support flange **12** to the diaphragm **9.**

In a preferred embodiment, the lower end portion **10** of the wall portion **5** has, when viewed in transversal section as shown on FIG.3, the shape of an arch with a concavity turned inward with respect of the container **1,** whereby the outer diameter, referenced D3, of the support flange **12** is smaller than the overall diameter D2 of the wall portion **5.**

The inner portion **11** has the shape of a frustum of a cone and, when viewed in transversal section as shown on FIG.3, inclines inwardly with respect of the container **1,** with a draft angle.

The cone shape of the inner portion **11** provides a vault stiffening and locking function to the diaphragm **9** in its inverted position (in dotted line on FIG.3), whereby the restriction of diameter of the inner portion **11** at its junction with the diaphragm **9** prevents the latter to articulate back from its inverted position with respect of the inner portion **11.** As a result, re-inversion of the diaphragm **9** back to its initial position (in continuous line on FIG.3) under the mere hydrostatic pressure of the content of the container is prevented.

The inner portion **11** has an axial extension which is important with respect of the outer diameter D3 of the support flange, hence the expression "high standing ring" to name the standing ring **8.** More specifically, the axial extension (or height) of the inner portion **11,** with reference H4, is greater than 1/10 of the outer diameter D3 of the support flange **12,** and preferably comprised between 1/10 and 1/5 of the outer diameter D3 of the support flange **12:**

$$\frac{D3}{10} \leq H1 \leq \frac{D3}{5}$$

In one preferred embodiment, which corresponds to the illustration of FIG.3, the height H4 of the inner portion **11** is of about 1/6 of the outer diameter D3 of the support flange **12:**

$$H4 \cong \frac{D3}{6}$$

The support flange **12** has a radial extension or width, noted W4, which is small with respect of the outer diameter D3 of the support flange **12.** More specifically, the width W4 of the support flange **12** is comprised between 5% and 10% - and preferably of about 6% - of the outer diameter D3 of the support flange **12:**

$$0.05 \cdot D3 \leq W4 \leq 0.1 \cdot D3$$

and, preferably:

$$W4 \cong 0.06 \cdot D3$$

The width W4 of the support flange **12** is also preferably in a ratio with the height H4 of the inner portion **11** comprised between 1/5 and 1/3, and preferably of about 1/4:

$$\frac{H4}{5} \leq W4 \leq \frac{H4}{3}$$

and preferably:

$$W4 \cong \frac{H4}{4}$$

In addition, in the just-blown non-filled configuration of the container **1** as depicted on FIG.1 and in continuous line on FIG.3, the support flange **12** does not quite extend in a plane perpendicular to the container axis but is in the shape of a frustum of a cone and shows an inward inclination A1 when shown in the transversal section of FIG.1, of a small angle with respect of a plane perpendicular to the container axis **X**. This provides a spring and absorbing effect under the hydrostatic pressure on the diaphragm **9** in its upwardly inverted position (in dotted lines on FIG.3), whereby pressure on the diaphragm **9** results in the support flange **12** pivoting and coming into abutment with a planar supporting surface instead of inversion of the diaphragm **9** back to its initial position (in continuous line on FIG.3).

In the just-blown non-filled configuration of the container **1** as depicted on FIG.1 and in continuous line on FIG.3, the invertible diaphragm **9** extends both inwards and downwards, from a outer edge **13** having a sharp apex where the diaphragm **9** connects to an upper end of the inner portion **11** of the high standing ring **8,** down to a smoother inner edge **14** where the diaphragm **9** connects to a central upwardly protruding recess **15.**

In a preferred embodiment, the radial extension or width, denoted W5, of the diaphragm **9,** is comprised between 50% and 80% - and preferably of about 60% - of the outer radius, denoted R3, of the support flange **12** (where R3 is half D3):

$$0.5 \cdot R3 \leq W5 \leq 0.8 \cdot R3$$

and, preferably:

$$W5 \cong 0.6 \cdot R3$$

In addition, the axial extension, or height, denoted H5, of the diaphragm, is such that the inner edge of the diaphragm extends slightly above a standing plane perpendicular to the container axis X and defined by an outer edge of the high standing ring **8.**

In other words, the height H5 of the diaphragm **9** is slightly lower than the height H4 of the high standing ring **8.** In a preferred embodiment, the height H5 of the diaphragm **9** is greater than 85% - and preferably of about 90% - of the height H4 of the standing ring **8:**

$$H5 \geq 0.85 \cdot H4$$

and, preferably:

$$H5 \cong 0.9 \cdot H4$$

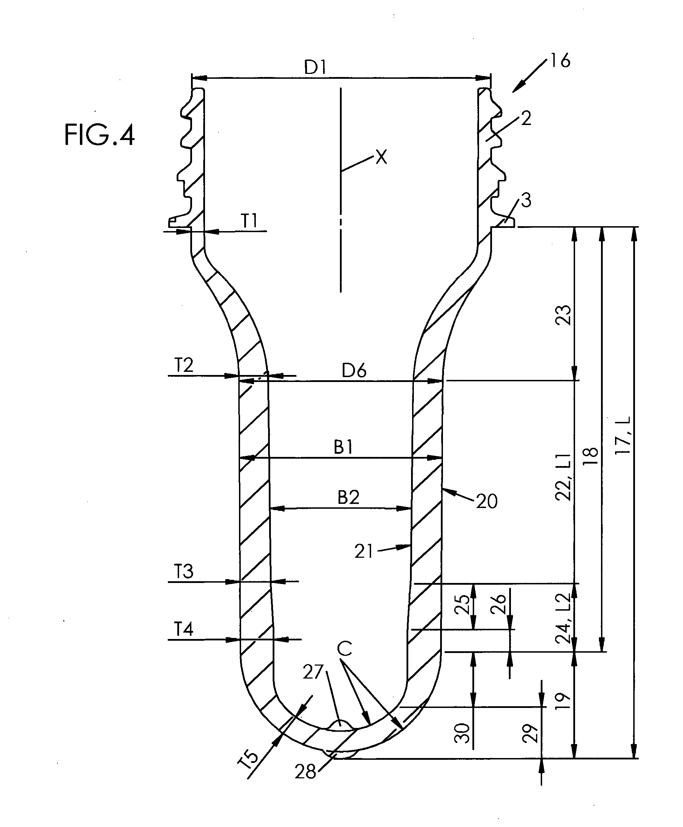

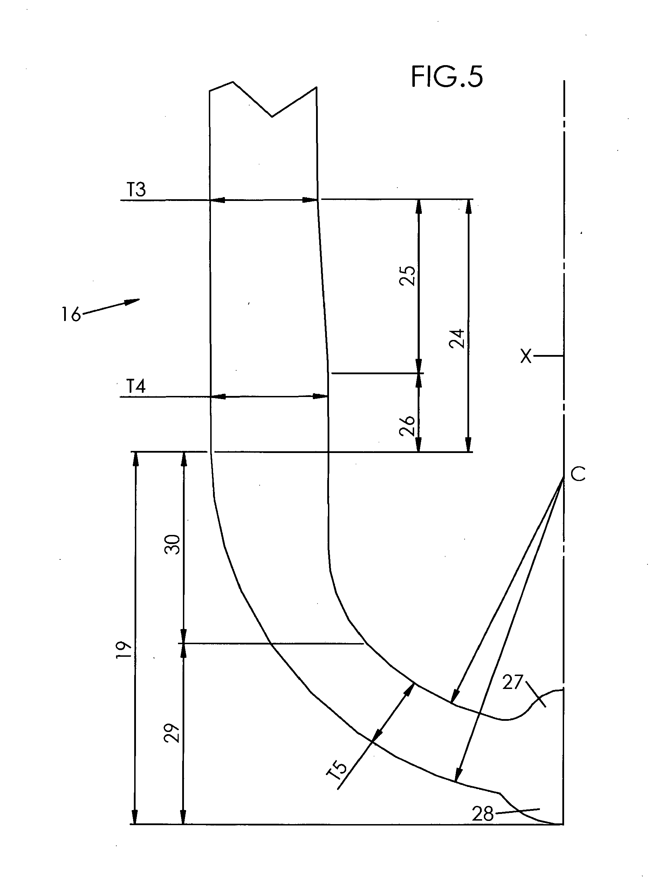

On FIG.4 and FIG.5, there is shown in more details a preform **16** from which the container **1** disclosed hereinbefore is formed. The preform **16** is made by injection or compression molding from a single plastic material, preferably PET.

The preform **16** comprises the same neck **2** (which is not subjected to variations during the blowing of the container) as the container **1,** which also terminates, at the lower end thereof, with the support collar **3.**

Below the collar **3,** the preform **16** has a body **17** which includes a wall **18** and, at a lower end of the wall **18,** a closed bottom **19** which terminates the preform **16** at a lower side opposite the neck **2.** The length of the preform body **17** (i.e. below the collar **3**), is denoted L.

In its wall **18** and bottom **19,** the preform **16** has an outer surface **20** and an inner surface **21.**

As depicted on FIG.4, the wall **18** of the preform **16** is comprised of a main segment **22** of substantially cylindrical shape, an upper end segment **23** which terminates the main segment **22** upwardly and connects to the collar **3,** and a lower end segment **24** which terminates the main segment **22** downwardly and connects to the bottom **19.**

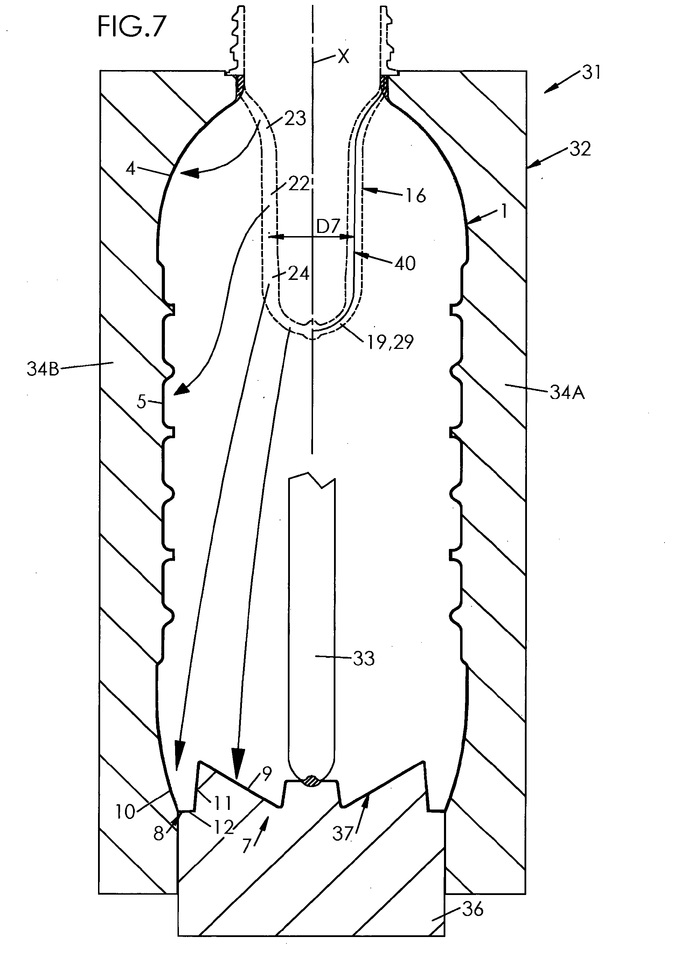

During the blow molding of the container **1,** the main segment **22** forms the wall portion **5** of the container **1;** the upper end segment **23** forms the shoulder **4** of the container **1;** the lower end segment **24** forms the high standing ring **8** of the container **1;** and the bottom **19** of the preform **16** forms the invertible diaphragm **9** and central protruding recess **15,** as shown by the arrows on FIG.7.

The overall diameter of the main segment **22,** taken at its junction with the upper end segment **23** is denoted D6.

In the depicted embodiment wherein the preform **16** corresponds to a container **1** of small capacity (i.e. less than 1 l, such as 0.5 or 0.6 l), the overall diameter D6 of the main segment **22** is smaller than the diameter D1 of the neck **2.** In an alternate embodiment in which the preform corresponds to a container of greater capacity (i.e. more than 1 l, such as 1.5 l or 2 l), this relationship may be reversed.

In a preferred embodiment corresponding to the illustrated example, the upper end segment **23** has the shape of a horn and smoothly connects the main segment **22** at diameter D6 to the collar **3** at diameter D1. As may be seen on FIG.4, the wall thickness of the preform **16** in the upper end segment **23,** as measured perpendicularly to the preform axis **X** (which is identical to the subsequent container axis **X**), increases from a value T1 immediately below the collar **3,** where it corresponds to the wall thickness of the preform **16** in the neck **2** (excluding the thread), to a value T2 at the junction with the main segment, where T1 is lower than T2, and preferably lower than half T2:

$$T1 < T2$$

and preferably:

$$T1 \leq 0.5 \cdot T2$$

In the illustrated preferred embodiment, the main segment **22** is in the shape of a frustum of a cone with a small draft angle B1 on the outer surface **20** and a small draft angle B2 on the inner surface **21,** both angles B1 and B2 being lower than 2°, and preferably:

$$B1 \leq B2 \leq 2°$$

In a preferred embodiment, B1 is smaller than 1°, and preferably of about 0.6°. Also in a preferred embodiment, B2 is smaller than 1.5°, and preferably of about 1.3°.

In a preferred embodiment, the length, taken axially and denoted L1, of the main segment **22,** is comprised between 60% and 70% - and preferably between 65% and 70% - of the length L of the preform **16:**

$$0{,}6 \cdot L \leq L1 \leq 0.7 \cdot L$$

and preferably:

$$0{,}65 \cdot L \leq L1 \leq 0.7 \cdot L$$

Although the preform wall thickness may be substantially constant along the main segment **22,** in a preferred embodiment, the preform wall thickness, as measured perpendicularly to the preform axis **X,** slightly (and linearly) increases from the value T2 at the junction of the upper end segment **23** and the main segment **22,** to a value T3 at the junction of the main segment **22** and the lower end segment **24:**

$$T2 < T3$$

The material distribution in the upper end segment **23** and main segment **22** is calculated to provide substantially constant thickness of the container **1** in the shoulder **4** and wall portion **5.**

The thickness increase in the upper end segment **23** allows for a sufficient thickness of the material in the container shoulder **4,** since the material located immediately below the collar **3** is less stretched (mostly in the radial or hoop direction) than the material located at the junction between the upper end segment **23** and the main segment **22** of the preform **16.** Similarly, the thickness increase in the main segment **22** allows for a sufficient thickness of the material in the wall portion **5** of the container **1,** since the material located at the junction between the main segment **22** and the upper end segment is less stretched (both in the axial or length direction and in the radial or hoop direction).

In the illustrated preferred embodiment, the lower end segment **24** has an upper section **25** of increasing wall thickness, adjacent the main segment **22,** and a lower section **26** of substantially constant wall thickness, adjacent the bottom **19.** In the lower section **26,** the preform **16** has a wall thickness, denoted T4, the value of which is therefore greater than the value T3 of the wall thickness of the preform **16** at the junction of the main segment **22** and lower end segment **24.** In a preferred embodiment, T4 is 5% to 15% greater than T3, and for example of about 10% greater than T3:

$$T4 \geq T3$$

and, preferably:

$$1{.}05 \cdot T3 \leq T4 \leq 1.15 \cdot T3$$

and, for example:

$$T4 \cong 1.1 \cdot T3$$

The increased wall thickness of the preform **16** in the lower end segment **24** allows for reinforcing the lower end portion **10** and the support flange **12,** more specifically in the vicinity of the junction between the lower end portion **10** and the support flange **12,** where rigidity is required on the one hand to facilitate the inversion process and, on the other hand, to provide good stability of the container **1** both during mass handling or storing operations, and during individual normal use of the container **1** where it is stored vertically standing on a planar surface such as a table or a refrigerator shelf.

In a preferred embodiment, the length, taken axially and denoted L2, of the lower end segment **24,** is comprised between 30% and 40% - and preferably between 30% and 35% - of the length L1 of the main segment **22.** In the preferred depicted example, L2 is about 33% of L1:

$$0{,}3 \cdot L1 \leq L2 \leq 0.4 \cdot L1$$

and preferably:

$$0{,}6 \cdot L1 \leq L2 \leq 0.35 \cdot L1$$

and, for example:

$$L2 \cong 0.33 \cdot L1$$

In a preferred embodiment illustrated on FIG.4, the preform **16** is provided with a rounded upstanding centering index **27** protruding inwardly from the inner surface **21** of the preform **16** in the axis **X** thereof.

Also in one embodiment illustrated on FIG.4, wherein the preform **16** is injection molded, the preform **16** is provided with a downwardly projecting central protrusion **28** which corresponds to the counter print of an injection gate formed in the mold in which the preform **16** was injection molded.

In a preferred embodiment, the bottom of the preform **16** has a central region **29** in the form of a spherical dome, the center C of curvature of which is located on the preform axis **X.**

In the central region **29,** the outer surface **20** and the inner surface **21** of the preform **16** are preferably both spherical with common center of curvature C.

In consequence, in the central region **29** (apart from the centering index and protrusion), the preform **16** has a wall thickness, denoted T5, as taken radially from the center C of curvature, which is substantially constant.

In the depicted example, the bottom of the preform **16** is also provided with a peripheral region **30** which is located below the lower end segment **24** and makes junction with the central region **29.** The peripheral region **30** is of decreasing wall thickness as taken radially from the center C of curvature of the central region **29,** such that the wall thickness T5 of the preform **16** in the central region **29** of the bottom **19** is smaller than the wall thickness T4 of the lower end segment **24.**

In a preferred embodiment, the wall thickness T5 of the preform **16** in the central region **29** is comprised between 50% and 80% (and preferably lower than 70%, and for example of about 65%) of the wall thickness T4 of the lower end segment **24:**

$$0.5 \cdot T4 \leq T5 \leq 0.8 \cdot T4$$

preferably:

$$0.5 \cdot T4 \leq T5 \leq 0.7 \cdot T4$$

and, for example:

$$T5 \cong 0.65 \cdot T4$$

The decreased wall thickness of the peripheral region **30,** and the comparatively smaller (and constant) wall thickness in the central region **29** of the preform bottom **19** allows for a better printing of the invertible diaphragm **9,** and a reduced thickness of the material in the invertible diaphragm **9,** thereby facilitating inversion thereof, as will be disclosed hereinafter.

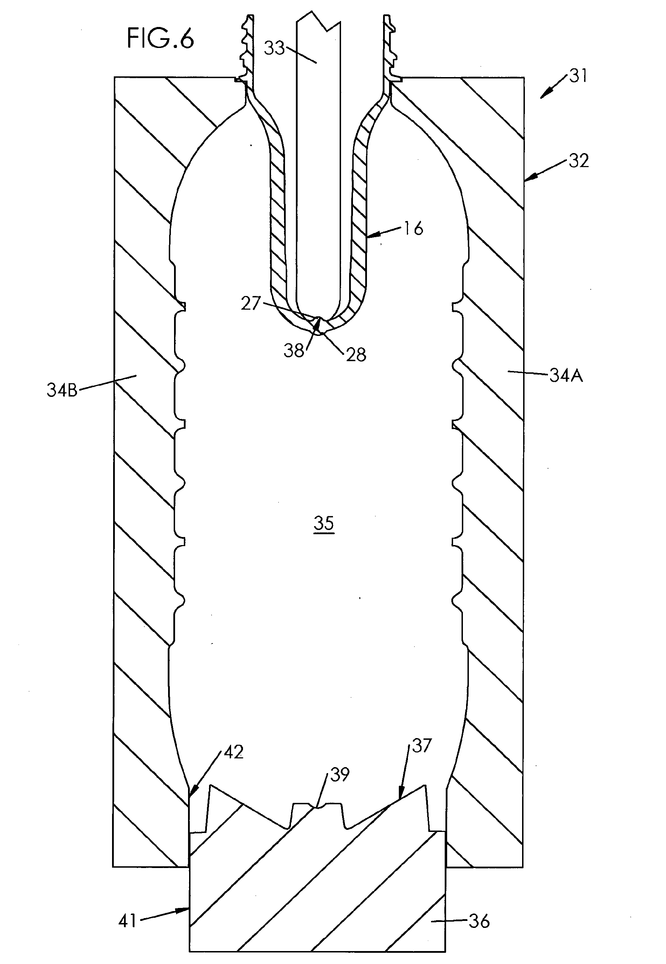

The manufacturing of the hot-fill container **1** from the preform **16** is achieved through a blow molding unit **31** including a blow mold **32** and a stretch rod **33,** as depicted on FIG.6 and FIG.7.

The blow mold **32** has sidewalls **34A, 34B,** including heating means, not illustrated (such as holes for the circulation of a heating fluid such as hot water or hot oil, or electric radiators received within the sidewalls **34A, 34B),** for heating the sidewalls **34A, 34B** at a predetermined temperature much greater than the average environment temperature and which, in a preferred embodiment, is of about 80-180°C.

The sidewalls **34A, 34B** together define at least part of a molding cavity **35** for receiving the preform **16** and form a counter print of the wall portion **5,** including the lower end portion **10** and shoulder **4** of the container **1.**

The blow mold **32** also has a mold base **36,** which has an upper surface **37** forming a counter print of the container base **7** including the support flange **12,** the inner portion **11,** the diaphragm **9** and the central protruding recess **15.** The sidewalls **34A, 34B,** together with the mold base **36,** define the whole molding cavity **35** of the container **1.**

The mold base **36** is movable with respect of the sidewalls **34A, 34B** between a retracted position (FIG.6) in which the upper surface **37** extends below the container base **7** to be blow molded, and a raised position (FIG.7) in which the upper surface **37** closes the cavity **35** and extends at the exact place of the container base **7** to be blow molded.

This provides an over stretching of the material during the blow molding, whereby the material of the preform **16** is first stretched beyond the final position of the container base **7,** in the retracted position of the mold base **36,** and then the mold base **36** is moved to its raised position in order to push the stretched material up to form the final shape of the container base **7.**

Such a process allows for a better printing quality, a better material thickness, and hence a better stiffness from the lower end portion **10** to the inner portion **11.**

During the stretch blow molding of the container **1,** the centering index **27** is received within a corresponding recess **38** formed axially at a lower end tip of a stretch rod **33.** This ensures a proper centering of the preform **16** until it reaches the mold base **36.**

By the end of the blow molding of the container **1,** the central outward protrusion **28** is received within a central recess **39** formed axially in a mold base **36.** This ensures a proper centering of the container base **7** during the pushing up thereof, through the displacement of the mold base **36** from its retracted position to its raised position.

During the blow molding of the container **1,** the preform **16** is subjected to a length stretch ratio comprised between 3.4 and 3.9, and a hoop stretch ratio comprised between 3.5 and 3.9.

The length stretch ratio is the ratio between the developed length of an average line **40** between the outer surface **20** and the inner surface **21** of the preform **16** taken along the body **17**, i.e. from immediately below the collar **3** to the center of the bottom **19**, in an axial sectional plane as depicted on FIG.1, and the developed length of the container **1** taken from immediately below the collar **3** to the center of the base **7**, in a same axial sectional plane as depicted on FIG.1.

The hoop stretch ratio is the ratio between the average diameter D7 of the main segment **22** (i.e. at about half of the length thereof), taken at the average line **40**) and the overall diameter **D2** of the wall portion **5** of the container **1**.

In a preferred embodiment, the length stretch ratio is comprised between 3.6 and 3.8. Also in a preferred embodiment, the hoop stretch ratio is comprised between 3.7 and 3.8.

Such stretch ratios, combined with the material distribution disclosed hereinbefore, allows for a better printing of the container wall portion **5** and base during the blow molding. More specifically, this facilitates the printing of stiffening ribs **6** on the wall portion **5** of the container **1**, which provide rigidity of the wall portion **5** against deformations due to a vacuum inside the container **1** and confine most of the container **1** deformation onto the container base **7**.

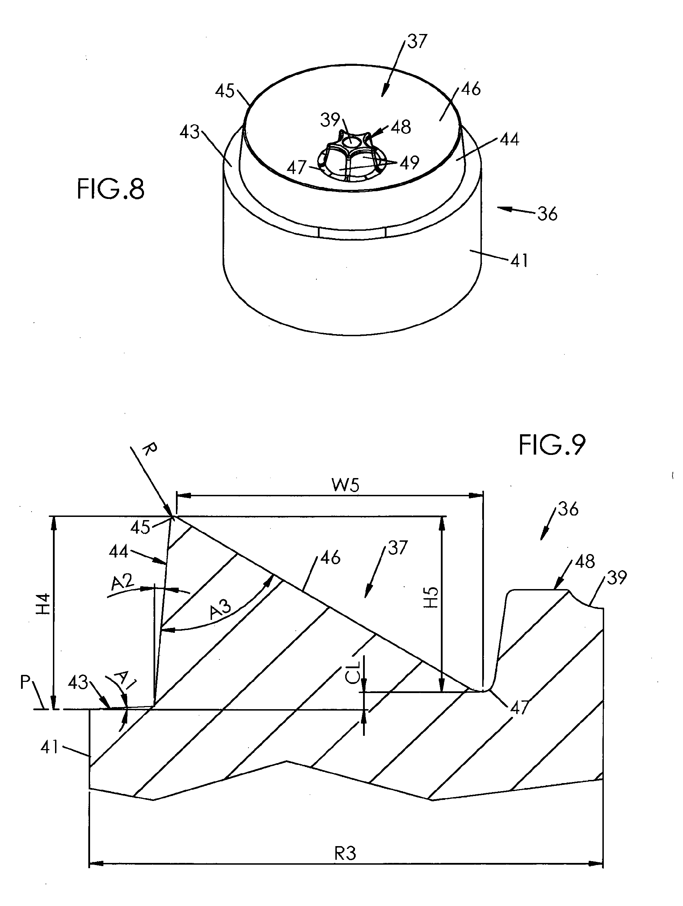

The mold base **36** is illustrated in further details on FIG.8 and FIG.9. As depicted on FIG.8, the mold base **36** comprises a cylindrical piston **41** by which the mold base **36** is capable of being axially moved and guided in a corresponding bore **42** in the bottom of the sidewalls **34A, 34B**. The piston **41** terminates by the upper surface **37** forming a counter print of the container base **7**, including the support flange **12**, the inner portion **11** of the high standing ring **8**, and also the diaphragm **9** and central protruding recess **15**.

The upper surface **37** includes an annular peripheral face **43** corresponding to the annular support flange **12** of the container base **7**. This peripheral face **43** does not quite extend in a plane perpendicular to the base mold axis (which is substantially identical to the preform and container axis **X**) but is in the shape of a frustum of a cone and shows an inward inclination when shown in the transversal section of FIG.9, of a small angle A1 comprised between 1° and 10°, preferably between 2° and 5° - and for example of about 3° - with respect of a plane perpendicular to the base mold axis.

The upper surface **37** also includes a frusto-conical outer face **44** corresponding to the inner portion **11** of the high standing ring **8**. The outer face **44** protrudes upwardly from an inner edge of the annular peripheral face **43**, up to a sharp apex **45** corresponding to the outer edge **13** at the junction between the inner portion **11** and the diaphragm **9**. The outer face **44** defines a draft angle A2 with respect of a vertical line parallel to the base mold axis comprised between 1° and 10°, preferably between 3° and 6°, and for example of about 4.5°.

The upper surface **37** of the mold base **36** further includes a frusto-conical downwardly inclined inner face **46** corresponding to the invertible diaphragm **9**. The inner face **46** extends from the apex **45** down to an annular inner edge **47** where it connects to a central uprising push-up **48** corresponding to the central recess **15** in the container base **7**.

The apex **45** is sharp in that it has a radius of curvature, denoted R, of less than or equal to 1.5 mm. In a preferred embodiment, the radius R of curvature of the apex **45** is less than or equal to 0.25 mm. The apex **45** may also have no measurable radius of curvature, i.e. the radius of curvature is less than or equal to 0.1 mm. This provides a sharp junction between the inner portion **11** and the diaphragm **9** in the container base **7**, allowing for both a better inward inversion of the diaphragm **9** wherein the sharp apex of the outer edge **13** at the junction between the inner portion **11** and the diaphragm **9** forms a punctual (when view in axial section) hinge therebetween, and a better rigidity of the container base **7** after inversion. Part of the mold base **36** may be lathe worked, in particular to obtain the sharp apex **45**.

The outer face **44** and inner face **46** together define at the apex **45** an angle A3, when shown in an axial sectional plane such as on FIG.9, comprised between 50° and 70°, and preferably comprised between 60° and 65°. In a preferred embodiment, angle A3 is of about 63°.

Combination of the draft angle A2, sharp apex **45** and angle A3 provide good combined molding capability and performance to the container base **7**. In particular, as already stated, upward inversion of the diaphragm **9** is facilitated whereas outward (or back) inversion thereof is prevented, whereby the diaphragm **9** is locked in its inverted position. Also, the extraction volume EV (i.e. the volume of liquid displaced during the diaphragm inversion, shown by the hatch lines on FIG.3), is maximized with respect of the whole volume of liquid in the container **1** after filling.

The extraction volume EV is also maximized due to the inner edge **47** located close to a peripheral plane P (corresponding to the standing plane of the container **1**) defined by the outer edge of the peripheral face **43**, whereby the inner edge **47** is spaced from the peripheral plane with a clearance CL comprised between 1 mm and 5 mm, and preferably of about 2 mm. Such clearance CL allows for a small downward piston movement of the central recess **15** of the container base **7** after filling, due to hydrostatic pressure, without affecting stability of the container **1** standing on its support flange **12**.

In a preferred embodiment depicted on FIG.8, the push-up **48** is star-shaped is transversal section and comprises a series of recesses **49** (five in the depicted example) which, by counter printing during the blow molding of the container **1**, form convex reinforcing ribs **50** in the central recess **15** of the container base **7**, thereby stiffening the central recess **15** and preventing inversion thereof under the combined effects of hydrostatic pressure and temperature of the content.

Inversion of the diaphragm **9** is preferably achieved mechanically by means of a mandrel which has a top apex capable of being received into the central recess **15** and which, after filling, capping and cooling down of the container **1,** is moved upwards whereas the container **1** is held tight. Under pressure of the mandrel, the diaphragm **9** deforms and articulates around the sharp junction with the inner portion **11** which is slightly bent outwards, until the diaphragm **9** upwardly inverts towards its final position depicted in dotted line on FIG.3. The inner portion **11** of the high standing ring **8** then bends back to its initial position where it forms an arch capable of standing buckling and bending constraints applied by the diaphragm **9** under hydrostatic pressure of the content.

## Claims

1.  A method of manufacturing a hot-fill container (**1**) from a plastic preform (**16**) by means of blow molding said preform (**16**), wherein said container (**1**) is provided with a base (**7**) including a high standing ring (**8**), wherein said preform (**16**) has an open neck (**2**), a wall (**18**) and a closed bottom (**19**), said method comprising the steps of:

    - heating the preform (**16**) at a temperature greater than the glass transition temperature of the plastic;
    - introducing the such heated preform (**16**) within a mold (**32**) provided with a mold base (**36**) and sidewalls (**34A, 34B**), which sidewalls are heated at a predetermined temperature;
    - blow molding the preform (**16**) to form the container (**1**) for subsequent hot-fill applications;
    - wherein the wall (**18**) of said preform (**16**) has a main segment (**22**) of substantially cylindrical shape and a lower end segment (**24**) of increased thickness adjacent the bottom (**19**), whereby said lower end segment (**24**) is stretched to form the high standing ring (**8**) of the container (**1**), and the bottom (**19**) has a thickness lower than the lower end segment (24),
    - the preform (**1**) is subjected to a length stretch ratio comprised between 3.4 and 3.9,
    **characterized in that**:

    the preform is subjected to a hoop stretch ratio comprised between 3.5 and 3.9, and the container is provided with a central outwardly-inclined invertible diaphragm (**9**) and whereby the bottom (**19**) is stretched to form the invertible diaphragm (**9**) of the container (**1**).

2.  A method according to claim 1, wherein the lenght stretch ratio is comprised between 3.6 and 3.8.

3.  A method according to claim 1 or claim 2, wherein the hoop stretch ratio is comprised between 3.7 and 3.8.

4.  A method according to any of the preceding claims, wherein the lower end segment (**24**) of the preform (**16**) has a wall thickness of about 10% greater than a wall thickness of the main segment (**22**).

5.  A method according to any of the preceding claims, wherein the bottom (**19**) has a central region (**29**) with a substantially constant wall thickness.

6.  A method according to claim 5, wherein the central region (**29**) has a wall thickness lower than 80% of the wall thickness in the lower end segment (**24**).

7.  A method according to claim 5, wherein the central region (**29**) has a wall thickness lower than 70% of the wall thickness in the lower end segment (**24**).

8.  A method according to claim 5, wherein the central region (**29**) has a wall thickness of about 65% of the wall thickness in the lower end segment (**24**).

9.  A method according to any of the preceding claims, wherein the preform (**16**) is axially stretched by a stretch rod (**33**).

10. A method according to claim 4, wherein the preform (**16**) is provided with a centering index (**27**) capable of being received in a recess (**38**) formed at a lower end tip of the stretch rod (**33**).

## Patentansprüche

1.  Verfahren zum Herstellen eines Heißfüllungsbehälters (1) aus einer Kunststoffvorform (16) mittels Blasformen der Vorform (16), wobei der Behälter (1) mit einer Basis (7) bereitgestellt ist, die einen hochstehenden Ring (8) aufweist,
    wobei die Vorform (16) einen offenen Hals (2), eine Wand (18) und eine geschlossene Unterseite (19) aufweist, wobei das Verfahren die folgenden Schritte umfasst:

    - Erwärmen der Vorform (16) bei einer Temperatur, die höher als die Glasübergangstemperatur des Kunststoffs ist:
    - Einführen der so erwärmten Vorform (16) in eine Gussform (32), die mit einem Formunterteil (36) und Seitenwänden (34A, 34B) bereitgestellt ist, wobei die Seitenwände auf eine vorbestimmte Temperatur erwärmt werden;

- Blasformen der Vorform (16) zum Formen des Behälters (1) für die nachfolgenden Heißfüllungsanwendungen;
- wobei die Wand (18) der Vorform (16) ein Hauptsegment (22) von im Wesentlichen zylindrischer Form und ein unteres Endsegment (24) mit erhöhter Dicke benachbart zu dem Boden (19) aufweist, wobei das untere Endsegment (24) gestreckt wird, um den hochstehenden Ring (8) des Behälters (1) zu formen, und der Boden (19) eine Dicke aufweist, die kleiner als das untere Endsegment (24) ist,
- wobei die Vorform (1) einem Längenstreckungsverhältnis unterzogen wird, das zwischen 3,4 und 3,9 beträgt,

dadurch gekenntzeichnet, dass die Vorform einem Beanspruchungsstreckungsverhältnis zwischen 3,5 und 3,9 unterzogen wird und der Behälter mit einer zentralen nach außen geneigten umkehrbaren Membran (9) bereitgestellt ist und wobei der Boden (19) gestreckt wird, um die umkehrbare Membran (9) des Behälters (1) zu formen.

**2.** Verfahren nach Anspruch 1, wobei das Längenstreckungsverhältnis zwischen 3,6 und 3,8 beträgt.

**3.** Verfahren nach Anspruch 1 oder Anspruch 2, wobei das Beanspruchungsstreckungsverhältnis zwischen 3,7 und 3,8 beträgt.

**4.** Verfahren nach einem der vorhergehenden Ansprüche, wobei das untere Endsegment (24) der Vorform (16) eine Wanddicke von etwa 10 % mehr als eine Wanddicke des Hauptsegments (22) aufweist.

**5.** Verfahren nach einem der vorhergehenden Ansprüche, wobei der Boden (19) einen zentralen Bereich (29) mit einer im Wesentlichen konstanten Wanddicke aufweist.

**6.** Verfahren nach Anspruch 5, wobei der zentrale Bereich (29) eine Wanddicke von weniger als 80 % der Wanddicke im unteren Endsegment (24) aufweist.

**7.** Verfahren nach Anspruch 5, wobei der zentrale Bereich (29) eine Wanddicke von weniger als 70 % der Wanddicke im unteren Endsegment (24) aufweist.

**8.** Verfahren nach Anspruch 5, wobei der zentrale Bereich (29) eine Wanddicke von etwa 65 % der Wanddicke im unteren Endsegment (24) aufweist.

**9.** Verfahren nach einem der vorhergehenden Ansprüche, wobei die Vorform (16) axial von einer Streckstange (33) gestreckt wird.

**10.** Verfahren nach Anspruch 4, wobei die Vorform (16) mit einem Zentrierindex (27) bereitgestellt ist, der in einer Ausnehmung (38) aufgenommen werden kann, die an einer unteren Endspitze der Streckstange (33) ausgebildet ist.

## Revendications

**1.** Procédé de fabrication d'un récipient (1) pouvant être rempli à chaud à partir d'une préforme en plastique (16) par le soufflage de ladite préforme (16), ledit récipient (1) étant pourvu d'une base (7) comportant une bague dressée haute (8), ladite préforme (16) ayant un col ouvert (2), une paroi (18) et un fond fermé (19), ledit procédé comprenant les étapes de :

   - chauffage de la préforme (16) à une température supérieure à la température de transition vitreuse du plastique ;
   - introduction de la préforme (16) ainsi chauffée à l'intérieur d'un moule (32) pourvu d'une base de moule (36) et de parois latérales (34A, 34B), lesquelles parois latérales sont chauffées à une température prédéfinie ;
   - soufflage de la préforme (16) pour former le récipient (1) pour des applications subséquentes de remplissage à chaud ;
   - la paroi (18) de ladite préforme (16) ayant un segment principal (22) de forme sensiblement cylindrique et un segment d'extrémité inférieur (24) d'épaisseur accrue à proximité du fond (19), ledit segment d'extrémité inférieur (24) étant étiré pour former la bague dressée haute (8) du récipient (1), et le fond (19) ayant une épaisseur inférieure à celle du segment d'extrémité inférieur (24),
   - la préforme (1) étant soumise à un rapport d'étirage en longueur comprise entre 3,4 et 3,9, **caractérisé en ce que** la préforme est soumise à un rapport d'étirage circonférentiel compris entre 3,5 et 3,9 et le récipient est pourvu d'un diaphragme (9) central inversible incliné vers l'extérieur, et le fond (19) étant ainsi étiré pour former le diaphragme inversible (9) du récipient (1).

**2.** Procédé selon la revendication 1, dans lequel le rapport d'étirage en longueur est compris entre 3,6 et 3,8.

**3.** Procédé selon la revendication 1 ou la revendication 2, dans lequel le rapport d'étirage circonférentiel est compris entre 3,7 et 3,8.

**4.** Procédé selon l'une quelconque des revendications précédentes, dans lequel le segment d'extrémité inférieur (24) de la préforme (16) a une épaisseur de paroi supérieure d'environ 10 % à une épaisseur de paroi du segment principal (22).

5. Procédé selon l'une quelconque des revendications précédentes, dans lequel le fond (19) a une région centrale (29) avec une épaisseur de paroi sensiblement constante.

6. Procédé selon la revendication 5, dans lequel la région centrale (29) a une épaisseur de paroi inférieure à 80 % de l'épaisseur de paroi dans le segment d'extrémité inférieur (24).

7. Procédé selon la revendication 5, dans lequel la région centrale (29) a une épaisseur de paroi inférieure à 70 % de l'épaisseur de paroi dans le segment d'extrémité inférieur (24).

8. Procédé selon la revendication 5, dans lequel la région centrale (29) a une épaisseur de paroi d'environ 65 % de l'épaisseur de paroi dans le segment d'extrémité inférieur (24).

9. Procédé selon l'une quelconque des revendications précédentes, dans lequel la préforme (16) est étirée axialement par une tige d'étirage (33).

10. Procédé selon la revendication 4, dans lequel la préforme (16) est pourvue d'un index de centrage (27) susceptible d'être reçu dans un évidemment (38) formé à une pointe d'extrémité inférieure de la tige d'étirage (33).

FIG.1

FIG.2

FIG.3

FIG.4

FIG.5

FIG.6

FIG.7

FIG.8

FIG.9

**EP 2 711 152 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6896147 B, Graham
- US 7451886 B, Amcor
- US 20080047964 A, Denner
- US 4035455 A, Rosenkranz
- US 2009223920 A
- JP 2008178994 A